# EUROPEAN PATENT APPLICATION

(11) **EP 0 594 910 A1**
(43) Date of publication of application: **04.05.1994**
(21) Application number: 92309993.1
(22) Date of filing: 30.10.1992
(51) Int. Cl.: B32B 17/10, C03C 27/12, C03C 17/38

(54) **Laminated ornamental glass**

(71) Applicant: Lin, Chii-Hsiung, Taiwan (TW)
(72) Inventor: Lin, Chii-Hsiung, Taiwan (TW)
(74) Representative: Gordon, Michael Vincent

(57) **Abstract**

A laminated ornamental glass, capable of light transmission, comprises:
a) a first sheet of transparent or translucent glass (1);
b) a first coating layer (3) having opaque regions arranged in an array or net which has been printed or otherwise applied to one side of said glass (1) with said first coating layer (3) leaving transparent coating-free crevice portions (2a) between said opaque regions;
c) a second, white coating layer (5) and a third, black or grey oil ink coating layer (6) with the same pattern as that of said first coating layer (3) which have been printed or otherwise applied over said first coating layer; and
d) a second sheet of transparent or translucent glass (4) arranged over said third coating layer (6).

## Description

This invention relates to laminated ornamental glass which can be used for many constructional purposes, not only indoors as interior partitions, walls, interior decoration or furniture but also outdoors as a decorative material, in a light-passable curtain wall or as the glass for doors and windows.

As living standards are being improved and raised, people are paying more attention to the construction of outer walls of buildings, windows and doors as well as interior decoration, furniture and partitions, with particular regard to luminosity, safety and privacy.

Conventionally, the ornamental glass for an interior partition, such as a screen or an inlaid plate of wall, is suitable for indoor use only. Such ornamental glass can be prepared by (1) printing a desired glazed pattern directly on a single sheet of glass, laminating with an adhesive a sheet of resin film, (2) paper with desired glazed pattern printed on in advance, (3) reprinting said glazed pattern on the surface of said glass, (4) placing the resin film or paper with glazed pattern between two sheets of glass substrates followed by laminating them with an adhesive under heat and pressure into an integrated widely used so-called ornamental glass plate. Among these methods of producing the ornamental glass, some require a laminating curing treatment under heat and pressure, a good printing technique for printing the glazed pattern on the resin film or paper, and glass-laminating skills for obtaining the desired delicate glazed pattern as well as a bubble-free ornamental glass article, so the cost of production is high. Moreover, the rim of said laminated glass article should be subject to a further special rim-sealing treatment prior to its practical application otherwise the article which is composed of different materials is apt to fall apart as room temperature and moisture change. As to the first method, the glazed painting pattern printed by such method on one of the surfaces of a single sheet of glass is exposed to the air, and is therefore subject to sunlight or oxidization so the colour of said glazed pattern will change and fade, as well as being subject to damage when cleaning. Aside from the above-mentioned disadvantages, the material of the glazed painting pattern printed on conventional ornamental glass plates is an opaque glaze pigment, paint, oil ink or a mixture thereof which after a period of time will fade away while being exposed to sunshine (infrared ray or ultraviolet rays), so such ornamental glass plates can only be used indoors.

A heat ray reflecting glass structure of similar construction to the present invention is known from my unpublished but co-pending European patent application No. 92305601.4

According to the present invention, a laminated ornamental glass comprises:
a) a first sheet of transparent or translucent glass;
b) a first coating layer having opaque regions arranged in an array or net which has been printed or otherwise applied to one side of said glass, with said first coating layer leaving transparent coating-free crevice portions between said opaque regions;
c) a second, white coating layer and a third, black or grey oil ink coating layer with the same pattern as that of said first coating layer which have been printed or otherwise applied over said first coating layer; and
d) a second sheet of transparent or translucent glass arranged over said third coating layer.

Advantages of the present invention are listed hereinafter.

One advantage is that the laminated ornamental glass can be used indoors as well as outdoors i.e. use is not restricted to interior partitions, screen walls or ornamental inlaid plates but includes outer walls of a building, curtain walls of constructions, and the glass of doors and windows which are transparent and heat-insulating under different conditions of luminosity.

Another advantage is that the laminated ornamental glass can be composed of two sheets of transparent or light-coloured, flat or bent, reinforced glass or an ion exchange reinforced glass, in which one of the two sheets is selected from polyester or polycarbonate resin according to the use.

A further advantage is that the laminated ornamental glass can be transparent and heat-insulating. It can be produced by directly printing or coating a glazed painting or striped-figure coating layer, having an array of preferably circles or hexagons, by screen printing on the inner surface of the outwardly-facing glass substrate, a white paint coating layer and a black or grey oil ink coating layer then in turn being printed or coated with the same pattern (circles or hexagons) over the glazed painting or striped-figure coating layer when dried. Therefore, the transparency and indoor luminosity can be optionally adjusted to the desired degree by changing the ratio of the sizes of the coating layers to the crevice portions between the coating layers.

Still another advantage is that the laminated ornamental glass can employ adhesive admixed with infrared or ultraviolet absorbents for absorbing infrared rays or ultraviolet rays to render a heat insulation effect or have embedded in it metallic wires or net making it theft-proof or explosion-proof and said glass may be thickened as desired to increase penetration resistance, high net crack, and sound insulation.

Still a further advantage is that the laminated ornamental glass can be indoor-used or outdoor-used without needing to be made by highly skilled printing or glass-laminating techniques. In other words, the aforementioned three coating layers formed by the glazed painting coating layer having intercrossing stripes or a net configuration composed of circles or hexagons, the white paint coating layer and the black or grey oil ink coating layer can be coated or directly printed on the glass substrate simply by a conventional screen printing method, so that the laminated ornamental glass is easy to produce at a high production rate with low defect level.

The term "array" is to be understood as including, for example, stripes which may be parallel, and the term "glass" is to be understood as including plastics materials.

It will be appreciated that the coating-free crevice portions between the patterned coating layers are filled by the adhesive in the process of lamination which involves the application of heat and pressure.

It will also be appreciated that, because the first coating layer is printed, spread or coated on the inner surface of the outwardly-facing glass substrate, and the white coating layer is positioned between the aforesaid layer and the black or grey oil ink coating layer, only the printing or coating pattern of the first coating layer rather than indoor objects can be seen when viewed from the outside of the building or room, whereas the black or grey coating pattern composed of for example circles or hexagons can be seen and outdoor objects can be seen through the coating-free crevice portions, when viewed from the inside of the building or room.

The interior luminosity is adjustable by simply changing the ratio of the sizes of the opaque coating patterns to the coating-free transparent crevice portions, for example, 9:1, 6.5:3.5, or 5:5, depending on the need to raise the rate of transparency from 3% to 65%.

The glazed painting, white paint and oil ink employed for the opaque coating layers are primarily prepared by mixing conventional ceramic colour frit such as CaO, MnO, CdS, Cr₂O₃ or Fe₂O₃ 15 to 70 wt% with glass powder 30 to 85 wt% (the weight percentage is based on the total weight of the mixture obtained therefrom); most preferably the content of the ceramic colour frit is no more than 30 wt% and that of the glass powder is no less than 30wt% so that the adhesive force can be prevented from deterioration and sufficient colouration ability of the opaque material can be rendered.

The adhesive may be selected from polyvinyl butyryl resin, urethane resin and methyl acrylate resin or a mixture thereof, and the thickness of each coating layer may range from 0.04 mm to 0.18 mm, so said coating layers will not fade under sunshine due to the use of heat-resistant ceramic colour frit as material.

The laminated ornamental glass thus obtained may therefore be used not only as a glass with elegant and delicate coloured patterns for outwardly-facing windows or curtain walls of buildings but also as an ornamental inlaid material for outer walls of buildings. In addition, no duplicated virtual images or distorted static images can be seen on the surface of the laminated ornamental glass in which the intermediate coating layers are of opaque materials. Said intermediate coating layers may be thickened up to about 50 mm without the occurrence of the above-mentioned virtual problems. It means that the laminated ornamental glass of the present invention is 30% safer than conventional single sheet glass with the same thickness, and the penetration resistance, high net crack, sound insulation, and heat insulation will approach 100% while its thickness is up to 50 mm. Moreover, the adhesive may be further admixed with infrared or ultraviolet absorbents to absorb infrared rays or ultraviolet rays from outdoors, or embedded with steel wires or nets to make the glass become explosion-proof and theft-proof.

Laminated ornamental glass according to the present invention, and the prior art, will now be described in greater detail with reference to the accompanying drawings, in which:-
Fig. 1 is an enlarged cross-sectional view of the structure of a conventional laminated safety ornamental glass;
Fig. 2 is an enlarged cross-sectional view of the structure of an embodiment of the present invention;
Fig. 3 is an enlarged cross-sectional view of the structure of another embodiment of the present invention;
Fig. 4 is an enlarged cross-sectional view of the structure of a further embodiment of the present invention;
Fig. 5(a) is a view of a pattern composed of circles employed in this invention when viewed from inside;
Fig. 5(b) is a view of a pattern composed of hexagons employed in this invention when viewed from inside;
Fig. 6(a) is a glazed painting view of the laminated ornamental glass of this invention with a pattern composed of circles employed as a part of an interior window when viewed from outside;
Fig. 6(b) is the opposite side view of Fig. 6 (a);
Fig. 7(a) is the same glazed painting view as in Fig. 6(a) except that a hexagonal pattern is used instead of circles; and
Fig. 7(b) is the opposite side view of Fig. 7 (a).

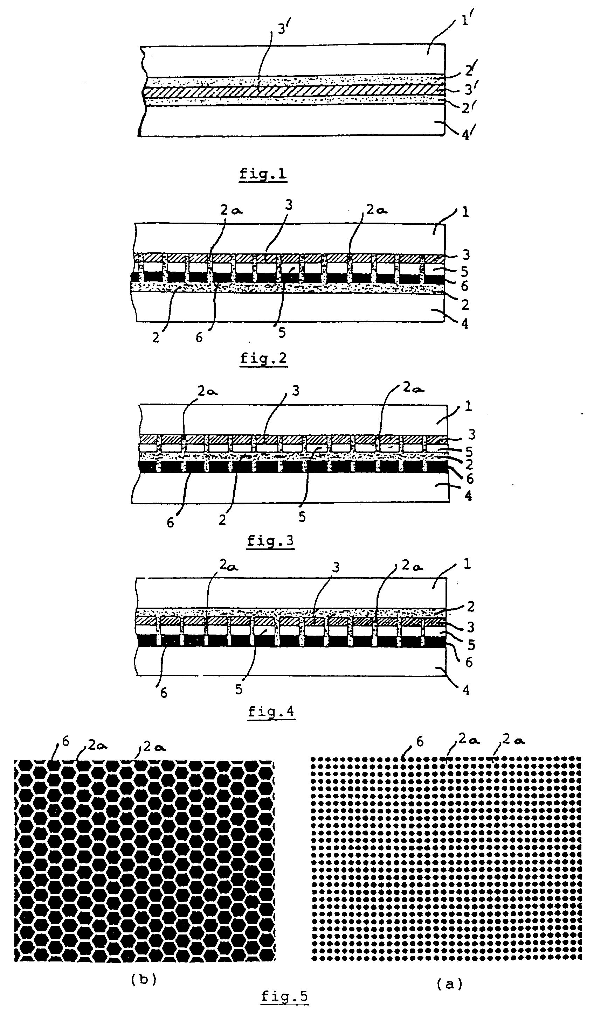

Conventional laminated ornamental glass, as shown in Fig. 1, is composed of an outwardly-facing transparent or light-coloured plate glass substrate 1', two layers of resin adhesive 2', a layer of resin film or paper 3' with a glazed painting or other pattern printed or coated thereon, positioned between the two adhesive layers 2', and an inwardly-facing transparent or dark-coloured heat ray absorbing plate glass substrate 4'. In other words, the glazed painting or other pattern of the conventional laminated ornamental glass is simply printed or coated on an intermediate layer of a resin film or paper 3' and then the patterned layer 3' is laminated between the plate glass substrates 1' and 4'. As the laminated ornamental glass thus obtained is not transparent, cannot be seen through, it can only be used for interior partitions or as an inlaid material for inner walls of buildings, rather than being used as an inlaid material for outer walls or the glass for outwardly-facing windows or curtain walls of buildings.

In Fig. 2 to Fig. 5, however, 1 is an outwardly-facing transparent or translucent plate glass substrate which is selected from sodium calcium silicates reinforced glass with or without heat treatment or sodium, potassium ion exchange reinforced glass; 2 is a conventional transparent adhesive which is selected from polyvinyl butyryl resin adhesive, polyester resin adhesive, methyl acrylate resin adhesive, urethane resin adhesive, two-component epoxy resin adhesive, one-component ultraviolet-sensitized curing adhesive, or one-component heating curing adhesive; 3, 5 and 6 are each a coating layer having an array of intercrossing stripes or a net configuration composed of circles or hexagons, which are directly and synchronously in an overlap manner printed, spread or coated by conventional screen printing on the inner surface of said transparent plate glass substrate 1 wherein 3 is a glazed painting or other pattern coating layer, 5 is a white coating layer and 6 is an oil ink coating layer which together leave crevice portions 2a without any coating between the opaque patterned coating layers 3, 5 and 6; and 4 is an inwardly-facing transparent, light-coloured, or translucent plate glass substrate which may be replaced by polyester or polycarbonate resin plate depending upon the desired use and need.

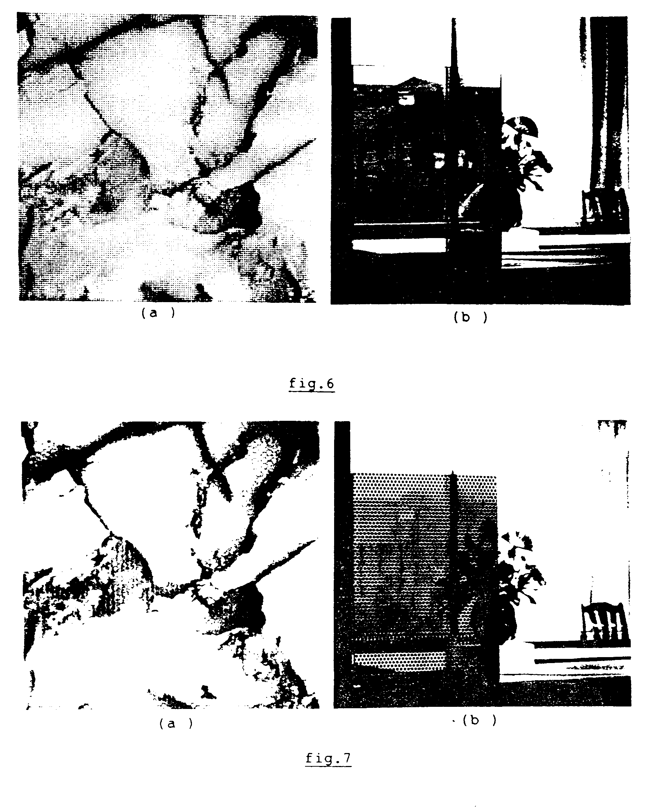

The peculiarity of the present invention is especially understood in terms of Fig. 6 and Fig. 7.

Fig. 6 (a) and Fig. 7 (a) both show that no indoor objects but instead a glazed marble-pattern painting is seen when viewed from the outside, with the aforementioned coating-free crevice portions 2a being seen only obscurely. On the other hand, Fig. 6(b) and Fig. 7(b) show that it is possible to see outdoor objects through said coating-free crevice portions 2a of the laminated ornamental glass of the invention when viewed from the inside.

## Claims

1. A laminated ornamental glass comprising:
a) a first sheet of transparent or translucent glass (1);
b) a first coating layer (3) having opaque regions arranged in an array or net which has been printed or otherwise applied to one side of said glass (1) with said first coating layer (3) leaving transparent coating-free crevice portions (2a) between said opaque regions;
c) a second, white coating layer (5) and a third, black or grey oil ink coating layer (6) with the same pattern as that of said first coating layer (3) which have been printed or otherwise applied over said first coating layer; and
d) a second sheet of transparent or translucent glass (4) arranged over said third coating layer (6).

2. A laminated ornamental glass according to claim 1, wherein the materials for forming said opaque regions, white paint and black or grey oil ink are composed of 15 to 70% by weight of ceramic colour frit and 30 to 85% by weight of glass powder, in which the weight percentages are based on the total weight of the mixtures.

3. A laminated ornamental glass according to claim 2, wherein the content of the ceramic colour frit is not more than 30% by weight and that of the glass powder is not less than 30% by weight.

4. A laminated ornamental glass according to any preceding claim, wherein said opaque regions are applied by screen printing.

5. A laminated ornamental glass according to any preceding claim, wherein each of said first, second and third coating layers has a thickness of between 0.04mm and 0.18 mm.

6. A laminated ornamental glass according to any preceding claim, wherein the ratio of the total area to that of the coating-free crevice portions is in the range of 9:1 to 5:5.
